## Europäisches Patentamt

## European Patent Office

## Office européen des brevets

(19)

(11) Veröffentlichungsnummer: **0 187 616**
**B1**

(12)

# EUROPÄISCHE PATENTSCHRIFT

(45) Veröffentlichungstag der Patentschrift:
**27.04.88**

(51) Int. Cl.⁴: **F 16 B  13/12**

(21) Anmeldenummer: **85810542.2**

(22) Anmeldetag: **15.11.85**

(54) **Radial aufweitbarer Dübel.**

(30) Priorität: **10.12.84  DE 3444988**

(43) Veröffentlichungstag der Anmeldung:
**16.07.86 Patentblatt 86/29**

(45) Bekanntmachung des Hinweises auf die Patenterteilung:
**27.04.88 Patentblatt 88/17**

(84) Benannte Vertragsstaaten:
**AT CH DE FR GB LI NL**

(56) Entgegenhaltungen:
**AU-B-13 561**
**CH-A-386 669**
**FR-A-2 273 968**
**US-A-1 821 401**
**US-A-1 848 142**
**US-A-3 128 666**

(73) Patentinhaber: **HILTI Aktiengesellschaft, FL- 9494 Schaan (LI)**

(72) Erfinder: **Herb, Armin, Lärchenstrasse 9, D-8123 Peissenberg (DE)**

(74) Vertreter: **Wildi, Roland, Hilti Aktiengesellschaft Patentabteilung, FL- 9494 Schaan (LI)**

## Beschreibung

Die Erfindung betrifft einen Dübel zur Verankerung in einem Aufnahmematerial, mit einem hülsenförmigen, an seinem rückwärtigen Endbereich mit Mitteln zur Lastaufnahme versehenen Dübelkörper, dessen vorderer, der Verankerung dienender Bereich Längsschlitze sowie am vorderen Ende des Dübelkörpers angeordnete, nach innen ragend umgebogene, sich gegenseitig aneinander abstützende, der radialen Aufweitung des Dübelkörpers dienende Lappen aufweist.

Dübel der obengenannten, aus der DE-A-1 940 299 bekannten Art werden verankert, indem nach dem Einsetzen des Dübels in ein Bohrloch ein stiftförmiges Element in den Dübelkörper eingetrieben wird. Beim Auftreffen des Elementes auf die in die Hülse ragenden Lappen werden diese zunächst in eine senkrecht zur Längsachse des Dübelkörpers durch dessen vorderes Ende verlaufende Ebene umgebogen.

Da sich die Lappen gegenseitig aneinander abstützen, wird dabei die Biegestelle, an der die Lappen mit der Hülse verbunden sind, unter Verformung des Dübelkörpers radial nach aussen verlagert. Beim weiteren Vortreiben des stiftförmigen Elementes werden die Lappen unter weiterer Verformung des Dübelkörpers nach aussen gebogen, wobei unter Umständen das stiftförmige Element zwischen den Lappen hindurchtreten kann.

Die beim Umbiegen der Lappen entstehenden seitlichen Kräfte sind relativ hoch, so dass sich die Lappen selbst verformen oder übereinanderlegen können, wobei die Aufweitung des Dübelkörpers nicht mehr gewährleistet ist.

Ein weiterer, aus der US-A-1 821 401 bekannter Spreizdübel weist eine aus zwei schalenförmigen, an ihrem in Setzrichtung vorderen Ende über einen mehrfach gefalteten Steg miteinander verbundenen Schalen bestehende Dübelhülse auf. Beim Spreizvorgang wird ein nagelförmiges Spreizelement zwischen Teile des Steges eingetrieben, wobei die Teile des Steges samt den sie umgebenden Schalen auseinandergespreizt werden. Die radiale Aufweitung dieses Spreizdübels ist relativ gering und zudem abhängig vom Schaftdurchmesser des Spreizelementes.

Der Erfindung liegt die Aufgabe zugrunde, einen Dübel der genannten Art zu schaffen, bei dem eine ausreichende Aufweitung des Dübelkörpers sichergestellt ist.

Gemäss der Erfindung wird diese Aufgabe dadurch gelöst, dass jeder Lappen über eine in seinem mittleren Bereich angeordnete Faltstelle winkelförmig ausgebildet ist, derart, dass die gegenseitige Abstützung der Lappen mittels der Faltstellen erfolgt.

Beim Setzvorgang des erfindungsgemäss vorgeschlagenen Dübels werden die Lappen somit gleichzeitig zusammengefaltet und umgebogen. Durch geeignete Ausbildung der Faltstelle kann der Verformungswiderstand zum zusammenfalten der Lappen gering gehalten werden. Beim Zusammenfalten der Lappen werden diese versteift, indem die doppelte Materialstärke der Lappen zur Verfügung steht, so dass auch die Gefahr, dass sich die Lappen beim Setzvorgang übereinanderlegen, verringert wird. Das Versteifen der Lappen auf diese Art erhöht ausserdem auch deren Knickfestigkeit.

Um eine genügende Aufweitung des Dübelkörpers zu erreichen, ist zweckmässigerweise die Länge der Lappen grösser als die lichte Weite des Dübelkörpers im Verankerungsbereich. Das die lichte Weite des Dübelkörpers übersteigende Mass kann je nach vorgesehener Anwendung des Dübels mehr oder weniger gross sein. So wird es bei einem zur Verankerung in nicht hinterschnittenen Bohrungen vorgesehenen Dübel weniger betragen als bei einem Dübel, der zur Verankerung in einer hinterschnittenen Bohrung oder in einem Hohlräume aufweisenden Aufnahmematerial vorgesehen ist.

Zur Aufnahme der beim Verformen der Lappen entstehenden seitlichen Druckkräfte stützen sich die freien Enden der Lappen vorteilhaft an der Innenwandung des Dübelkörpers ab. Eine solche Abstützung der Lappen ergibt eine Verteilung der seitlichen Kräfte einerseits auf die Biegestelle, an der die Lappen mit dem Dübelkörper verbunden sind, und andererseits auf die Auflage der freien Enden der Lappe an der Innenwandung des Dübelkörpers. Eine solche Verteilung der Kräfte erleichtert das Zusammenfalten der Lappen.

Beim Setzvorgang gleiten die freien Enden der Lappen entlang der Innenwandung des Dübelkörpers. Um dabei ein Eindrücken der freien Enden der Lappen in die Innenwandung des Dübelkörpers zu vermeiden, ist es zweckmässig, die Lappen etwa tropfenförmig auszubilden. Die im mittleren Bereich der Lappen angeordnete Faltstelle befindet sich dabei gleichzeitig auch etwa im Bereich der grössten Breite der Lappen. Dies ergibt wiederum eine relativ grosse Auflagefläche, an der sich die Lappen aneinander abstützen. Dadurch kann ebenfalls vermieden werden, dass sich die Lappen übereinanderlegen.

Für eine gleichmässige Verteilung der Kräfte sowie für eine genügende Abstützung der Lappen aneinander ist es vorteilhaft, zwei Lappen vorzusehen. Die Faltstellen der Lappen ergeben dabei Linienberührung der beiden Lappen. Insbesondere für grössere Dübeldurchmesser ist es jedoch auch möglich, mehr als zwei Lappen vorzusehen, wobei sich diese seitlich, d.h. an ihren Kanten, aneinander abstützen können.

Die Erfindung soll nachstehend anhand der sie beispielsweise wiedergebenden Zeichnungen näher erläutert werden. Es zeigen:

Fig. einen erfindungsgemässen Dübel im Längsschnitt, in unaufgeweitetem Zustand;

Fig. 2 die Abwicklung des Dübels gemäss Fig. 1, von dessen Innenseite her gesehen;

Fig. 3 eine stirnseitige Ansicht des Dübels gemäss Fig. 1, entsprechend dem Pfeil A;

Fig. 4 einen Dübel gemäss den Fig. 1 bis 3, in aufgeweitetem Zustand.

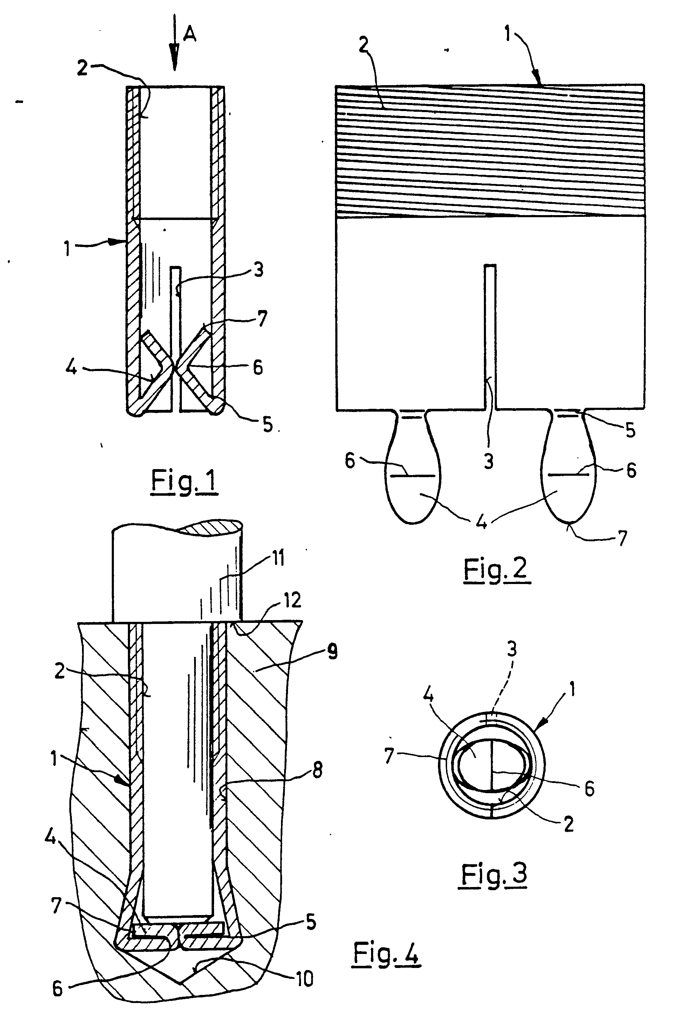

Der aus den Fig. 1 bis 4 ersichtliche Dübel weist einen insgesamt mit 1 bezeichneten, hülsenförmigen Dübelkörper aus Blech auf. Der Dübelkörper 1 ist mit einem Innengewinde 2 versehen. Das Innengewinde 2 kann beispielsweise, wie in Fig. 2 dargestellt, vor dem Rollen des Dübelkörpers 1 auf dessen Innenseite geprägt werden. Es ist jedoch auch möglich, das Innengewinde 2 erst nach dem Rollen des Dübelkörpers 1 herzustellen. Der Dübelkörper 1 ist mit einem sich etwa über die Hälfte der Länge des Dübelkörpers 1 erstreckenden Längsschlitz 3 versehen. Der Längsschlitz 3 dient dazu, ein radiales Aufweiten des Dübelkörpers 1 zu ermöglichen. Am vorderen Ende des Dübelkörpers 1 sind zwei Lappen 4 über einen biegsamen Steg 5 mit dem Dübelkörper 1 verbunden. Die Lappen 4 weisen eine Faltstelle 6 auf und ragen in gerolltem Zustand des Dübelkörpers 1 in dessen Inneres. Die freien Enden 7 der Lappen 4 stützen sich dabei an der Innenwandung des Dübelkörpers 1 ab. Ausserdem stützen sich die beiden Lappen 4 an der Faltstelle 6 gegenseitig aneinander ab.

In Fig. 4 ist der Dübelkörper 1 in ein Bohrloch 8 eines Aufnahmematerials 9 eingesetzt. Der Bohrlochgrund 10 dient dabei als axialer Anschlag für den Dübelkörper 1. Nach dem Einsetzen des Dübelkörpers 1 in das Bohrloch 8 wird ein im Durchmesser abgesetzter Spreizdorn 11 in den Dübelkörper 1 eingeführt. Nachdem der Spreizdorn 11 an den freien Enden 7 der Lappen 4 zur Anlage gelangt ist, wird der Spreizdorn 11 unter Verformung der Lappen 4 mittels Schlägen oder durch axialen Druck weiter in den Dübelkörper 1 eingetrieben. Die Lappen 4 werden dabei an der Faltstelle 6 zusammengefaltet, wobei sie sich nicht immer gegenseitig aneinander abstützen. Bei diesem Vorgang werden auch die Stege 5, mit denen die Lappen 4 mit dem Dübelkörper 1 verbunden sind, verformt. Wenn der Spreizdorn 11 seine in Fig. 4 dargestellte Endlage erreicht hat, kann der Spreizdorn 11 wieder herausgezogen werden. Die Lappen 4 bleiben dabei in der dargestellten Lage. Über das Innengewinde 2 kann nun beispielsweise ein Bauteil im Aufnahmematerial 9 verankert werden.

Bei entsprechender Ausbildung des Dübelkörpers 1, d.h. beispielsweise durch einen nicht dargestellten, sich an der Oberfläche des Aufnahmematerials 9 abstützenden Bund ist die Verwendung des Dübels auch in Bohrlöchern 8 möglich, die tiefer sind als die Länge des Dübelkörpers 1. Ein zu starkes Verformen des Dübelkörpers 1 kann dabei ebenfalls durch eine geeignete Ausbildung des Spreizdorns 11, d.h. beispielsweise durch eine auf die Dübellänge abgestimmte Anschlagschulter 12 vermieden werden. Durch die Gestaltung des Bohrloches bzw beim Setzen des Dübels in relativ weichem Aufnahmematerial 9 kann, wie in Fig. 4 dargestellt, ein Formschluss des Dübels zustande kommen.

## Patentansprüche

1. Dübel zur Verankerung in einem Aufnahmematerial mit einem hülsenförmigen, an seinem rückwärtigen Endbereich mit Mitteln (2) zur Lastaufnahme versehenen Dübelkörper (1), dessen vorderer, der Verankerung dienender Bereich Längsschlitze (3) sowie am vorderen Ende des Dübelkörpers angeordnete, nach innen ragend umgebogene, sich gegenseitig aneinander abstützende, der radialen Aufweitung des Dübelkörpers (1) dienende Lappen (4) aufweist, dadurch gekennzeichnet, dass jeder Lappen (4) über eine in seinem mittleren Bereich angeordnete Faltstelle (6) winkelförmig ausgebildet ist, derart, dass die gegenseitige Abstützung der Lappen (4) mittels der Faltstellen (6) erfolgt.

2. Dübel nach Anspruch 1, dadurch gekennzeichnet, dass die Länge der Lappen (4) grösser ist als die lichte Weite des Dübelkörpers (1) im Verankerungsbereich.

3. Dübel nach Anspruch 1 oder 2, dadurch gekennzeichnet, dass die freien Enden (7) der Lappen (4) sich an der Innenwandung des Dübelkörpers (1) abstützen.

4. Dübel nach Anspruch 1 oder 2, dadurch gekennzeichnet, dass die Lappen (4) etwa tropfenförmig ausgebildet sind.

5. Dübel nach Anspruch 1, dadurch gekennzeichnet, dass zwei Lappen (4) vorgesehen sind.

## Claims

1. A dowel for anchorage in a receiving material, comprising a sleeve-shaped dowel body (1) which is provided at its rearward end region with means (2) for the load reception and whose front region serving for the anchorage has longitudinal slots (3) as well as lugs (4) arranged at the front end of the dowel body, are bent over projecting inwardly, are mutually supported against one another and serve for the radial expansion of the dowel body (1), characterised in that each lug (4) is angularly fashioned by way of a fold (6) in its central region, in such a way that the mutual support of the lugs (4) is effected by means of the fold (6).

2. A dowel according to claim 1, characterised in that the length of the lugs (4) is greater than the clear width of the dowel body (1) in the anchorage region.

3. A dowel according to claim 1 or 2, characterised in that the free ends (7) of the lugs (4) are supported against the inner wall of the dowel body (1).

4. A dowel according to claim 1 or 2,

**0 187 616**

characterised in that the lugs (4) are approximately teardrop-shaped.

5. A dowel according to claim 1, characterised in that there are two lugs (4).

**Revendications**

1. Cheville pour l'ancrage dans un matériau de réception, avec un corps de cheville (1) en forme de douille qui comprend, dans sa section terminale postérieure, des organes (2) pour la fixation de la charge et, dans sa section antérieure servant à l'ancrage, des fentes longitudinales (3) et qui présente des languettes (4) disposées à l'extrémité antérieure du corps de cheville, repliées vers l'intérieur de façon à s'appuyer les unes sur les autres et servant à l'élargissement radial du corps de cheville (1), caractérisée en ce que chaque languette (4) est coudée en un point de pliage (6) situé dans la région médiane de telle façon que l'appui mutuel des languettes (4) se fait au moyen des points de pliage (6).

2. Cheville selon la revendication 1, caractérisée en ce que la longueur des languettes (4) est plus grande que le diamétre intérieur du corps de cheville (1) dans la zone d'ancrage.

3. Cheville selon l'une des revendications 1 ou 2, caractérisée en ce que les extrémités libres (7) des languettes (4) prennent appui sur la paroi intérieure du corps de cheville (1).

4. Cheville selon l'une des revendications 1 ou 2, caractérisée en ce que les languettes (4) présentent approximativement une forme de goutte.

5. Cheville selon la revendication 1, caractérisée en ce qu'elle comprend deux languettes (4).

0 187 616

Fig.1

Fig.2

Fig.3

Fig.4